# EUROPEAN PATENT SPECIFICATION

(11) **EP 4 037 011 B1**
(45) Date of publication and mention of the grant of the patent: **26.07.2023**
(21) Application number: 22153885.3
(22) Date of filing: 28.01.2022
(51) Int. Cl.: H01M 4/13, H01M 4/80, H01M 4/66, H01M 10/0525

(54) **ELECTRODE AND ELECTRICITY STORAGE DEVICE**
ELEKTRODE UND ELEKTRIZITÄTSSPEICHERVORRICHTUNG
ÉLECTRODE ET DISPOSITIF DE STOCKAGE D'ÉLECTRICITÉ

(30) Priority: 01.02.2021 JP 2021014550
(43) Date of publication of application: 03.08.2022
(73) Proprietor: HONDA MOTOR CO., LTD., Tokyo 107-8556 (JP)
(72) Inventor: TANIUCHI, Takuya, Wako-shi, Saitama, 351-0193 (JP); TANAAMI, Kiyoshi, Wako-shi, Saitama, 351-0193 (JP); OHTA, Masahiro, Wako-shi, Saitama, 351-0193 (JP); ARIGA, Toshiyuki, Wako-shi, Saitama, 351-0193 (JP); TANAKA, Toshimitsu, Wako-shi, Saitama, 351-0193 (JP)
(74) Representative: Heubeck, Christian

(56) References cited:
- EP-A1- 0 790 656
- US-A1- 2020 313 155

## Description

This application is based on and claims the benefit of priority from Japanese Patent Application No. 2021-014550, filed on 1 February 2021.

### BACKGROUND OF THE INVENTION

### Field of the Invention

The present invention relates to an electrode and an electricity storage device.

### Related Art

Conventionally, a lithium-ion secondary battery has been widely prevalent as an electricity storage device having a high energy density. The lithium-ion secondary battery, for example, includes a separator between a positive electrode and a negative electrode and is filled with an electrolytic solution. An all-solid-state battery using an inorganic solid electrolyte instead of the electrolytic solution has also been known.

There are various requirements for such a lithium-ion secondary battery depending on its application. For example, when the battery is applied for automobiles, there is a demand to further improve a volumetric energy density. In order to meet the demand, for example, a method for increasing a packing density of an electrode active material may be used.

There has been proposed, as the method for increasing a packing density of an electrode active material, to use a foamed metal as a current collector constituting a positive electrode and a negative electrode (see Patent Documents 1 and 2). The foamed metal has a network structure having uniform pore size, and a large surface area. Therefore, the amount of the electrode active material per unit area of an electrode can be increased by filling the pores of the foamed metal with an electrode material mixture including the electrode active material.
Patent Document 1: Japanese Unexamined Patent Application, Publication No. H07-099058
Patent Document 2: Japanese Unexamined Patent Application, Publication No. H08-329954

### SUMMARY OF THE INVENTION

When the foamed metal is used as the current collector, it is common to form an electrode tab by compressing, e.g., pressing an end portion of the foamed metal.

However, there is a problem that an output of the lithium-ion secondary battery decreases as a result of volume expansion of the electrode material mixture during charge and discharge applying stress to and generating cracks at an interface between the electrode tab and a portion of the current collector which is filled with the electrode material mixture. The problem is serious especially when using a negative electrode active material with large volume expansion such as Si and Sn.

An object of the present invention is to provide an electrode with improved durability.

One aspect of the present invention relates to an electrode according to the appended claims.

Another aspect of the present invention relates to the electrode in an electricity storage device.

According to the present invention, an electrode with improved durability can be provided.

### BRIEF DESCRIPTION OF THE DRAWINGS

FIG. 1 is a cross-sectional view showing one exemplary electrode according to the present embodiment;
FIG. 2 is a top view showing one exemplary plate-shaped metal body and electrode tab corresponding to the electrode in FIG. 1; and
FIG. 3 is a cross-sectional view showing one exemplary lithium-ion secondary battery according to the present embodiment.

### DETAILED DESCRIPTION OF THE INVENTION

Embodiments of the present invention will be described with reference to drawings.

### <Electrode>

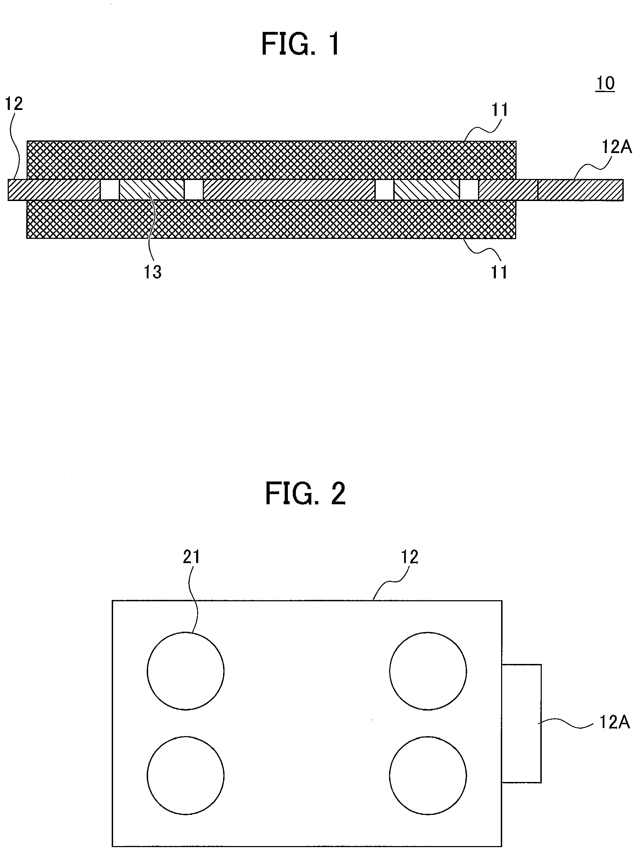

FIG. 1 shows one exemplary electrode according to the present embodiment. FIG. 2 shows one exemplary plate-shaped metal body and electrode tab corresponding to the electrode in FIG. 1.

An electrode 10 includes current collectors 11, an electrode material mixture, a plate-shaped metal body 12 having through-holes 21 formed therethrough (see FIG. 2), and an electrode tab 12A. Each of the current collectors 11 is a porous metal body and has pores filled with an electrode material mixture. The electrode tab 12A is an extending portion extending from a plate-shaped metal body 12 and a resin 13 is present in the through-holes 21. The current collector 11 has an inner region in which the through-holes 21 of the metal-shaped body 12 are located in top view.

The current collector 11 filled with the electrode material mixture and the electrode tab 12A are present as separate structures in the electrode 10. Therefore, no crack is generated at an interface between the current collector 11 and the electrode tab 12A even with volume expansion of the electrode material mixture during charge and discharge. As a result, output stability of the lithium-ion secondary battery is improved.

Furthermore, in the electrode 10, the resin 13 is present inside the through-holes 21 formed through the plate-shaped metal body 12. Therefore, the resin 13 can absorb volume expansion in the thickness direction of the electrode material mixture.

In the electrode 10, the plate-shaped metal body 12 is provided such that the region in which the through-holes 21 of the plate-shaped metal body 12 are provided is located inside the current collector 11. In this regard, the plate-shaped metal body may be provided such that the region in which the through-holes 21 of the plate-shaped metal body 12 are provided is located in an upper or lower portion of the current collector 11.

In the electrode 10, a porous metal body filled with the resin may be provided inside the through-holes 21. In this case, the porous metal body can have an anchoring effect to prevent stacking misalignment between the current collector 11 on the upper side of the plate-shaped metal body 12 and the current collector 11 on the lower side of the plate-shaped metal body 12.

Note that, the porous metal body to be filled with the resin may be the same as or different from the porous metal body constituting the current collector 11.

### [Porous metal body]

The porous metal body is a foamed metal.

The foamed metal has a network structure and a large surface area. When a foamed metal is used as the current collector, pores of the foamed metal can be filled with the electrode material mixture so that the amount of the electrode active material per unit area of the electrode can be increased and that a secondary battery with an improved volumetric energy density can be provided. Furthermore, the electrode material mixture is more easily fixed, which allows a thick film of the electrode material mixture to be formed without having to thicken a slurry to be used for coating the electrode material mixture. Furthermore, the amount of binder required for thickening the slurry can be reduced. Therefore, a thick film of the electrode material mixture with lower resistance can be formed compared to the case of using a metallic foil as the current collector. Therefore, a capacity per unit area of the electrode can be increased, which can contribute to a higher capacity of the secondary battery.

Examples of metal constituting the porous metal body include nickel, aluminum, stainless steel, titanium, copper, and silver. Among them, the porous metal body constituting a positive electrode current collector is preferably foamed aluminum and the porous metal body constituting a negative electrode current collector is preferably foamed copper or foamed stainless steel.

### [Electrode material mixture]

The electrode material mixture includes the electrode active material and may further include other components.

Examples of the other components include a solid electrolyte, a conductive aid, and a binder.

A positive electrode active material included in a positive electrode material mixture is not particularly limited, as long as it can occlude and release lithium ions. Examples thereof include LiCoO₂, Li(Ni_{5/10}Co_{2/10}Mn_{3/10})O₂, Li (Ni_{6/10}Co_{2/10}Mn_{2/10})O₂, Li (Ni_{8/10}Co_{1/10}Mn_{1/10})O₂, Li(Ni_{0.8}Co_{0.15}Al_{0.05})O₂, Li(Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, and sulfur.

A negative electrode active material included in a negative electrode material mixture is not particularly limited, as long as it can occlude and release lithium ions. Examples thereof include metallic lithium, a lithium alloy, a metal oxide, a metal sulfide, a metal nitride, Si, SiO, Sn, and a carbon material.

Examples of the carbon material include artificial graphite, natural graphite, hard carbon, and soft carbon.

### [Plate-shaped metal body]

A shape of the plate-shaped metal body is not particularly limited, as long as it can collect current. For example, the plate-shaped metal body may be foil-like, mesh-like, or foam-like.

Examples of a metal constituting the plate-shaped metal body include nickel, aluminum, stainless steel, titanium, and copper. Among them, the plate-shaped metal body for the positive electrode is preferably aluminum and the plate-shaped metal body for the negative electrode is preferably copper.

When the plate-shaped metal body is a metallic foil, a region of the metallic foil to be brought into contact with the current collector may be coated with carbon or increased in surface roughness so as to have a higher friction coefficient. This can prevent laminate misalignment between the current collector over the metallic foil and the current collector under the metallic foil.

The plate-shaped metal body may have a surface area larger than that of the current collector. This allows current collection even when the electrode material mixture expands and, therefore, the output stability of the lithium-ion secondary battery is improved.

A thickness of the plate-shaped metal body is preferably 1 um or more and 500 um or less and further preferably 5 um or more and 200 um or less.

A cross-section shape of the through-holes formed through the plate-shaped metal body is not particularly limited. Examples thereof include a circle and a polygon.

The ratio of the total cross-section area of the through-holes through a surface of the plate-shaped metal body to the surface area of the plate-shaped metal body is preferably 1% or more and 90% or less and further preferably 5% or more and 50% or less.

The number of the through-holes formed through the plate-shaped metal body may be one or more, but two or more through-holes can prevent θ misalignment.

Note that, when a plurality of the through-holes is formed through the plate-shaped metal body, the through-holes are preferably diagonally formed through the surface of the plate-shaped metal body from the viewpoint of prevention of the θ misalignment.

### [Electrode tab]

The electrode tab may be formed by extending an end portion of the plate-shaped metal body with the application of pressure.

### [Resin]

The resin being present in the through-holes through the plate-shaped metal body is not particularly limited, as long as it can absorb volume expansion in a thickness direction of the electrode material mixture. Examples thereof include a thermosetting resin, a thermoplastic resin, and a light-curing resin.

Examples of the thermosetting resin include a polyimide resin, an epoxy resin, a silicone resin, and a polyurethane resin.

Examples of the thermoplastic resin include a polyolefin resin, a polystyrene resin, a fluororesin, a polyvinyl chloride resin, a polymethacrylic acid resin, and a polyurethane resin.

Examples of the light-curing resin include a silicone resin, a polymethacrylic acid resin, and a polyester resin.

### <Method for producing electrode>

A method for producing an electrode according to the present embodiment is not particularly limited and a common method in the art can be applied.

A method for disposing a region of the plate-shaped metal body having through-holes formed therethrough in the current collector may be a method in which the resin is disposed in the through-holes through the electrode tab, and then the region of the electrode tab having the through-holes formed therethrough is sandwiched between the metallic porous bodies each having pores filled with the electrode material mixture and pressed together to adhere to each other.

A method for filling the pores in the current collector with the electrode material mixture is not particularly limited. Examples thereof include a method in which the pores in the current collector are filled with a slurry including the electrode material mixture with the application of pressure using a plunger-type die coater and a method in which the pores in the current collector are impregnated with a slurry including the electrode material mixture in a dipping method.

Another method for filling the pores in the current collector with the electrode material mixture may be a method in which the electrode material mixture penetrates and fill the pores in the current collector by the action of a difference in pressure generated between a surface of the current collector to which the electrode material mixture is to be introduced and an opposite surface thereto. In this case, a form of the electrode material mixture to be introduced is not particularly limited. The electrode material mixture may be a powder of the electrode material mixture or a liquid such as a slurry including the electrode material mixture.

Alternatively, a porous metal body having pores filled with a resin may be disposed instead of the resin in the through-holes of the electrode tab.

A method for filling the pores in the porous metal body with the resin is the same as the method for filling the pores in the current collector with the electrode material mixture.

After the electrode tab is disposed in the current collector, a common method in the art can be applied. For example, the current collector in which the electrode tab is disposed is pressed to obtain the electrode. In this case, a density of the electrode material mixture can be adjusted through pressing.

### <Electricity storage device>

The electricity storage device of the present embodiment includes the electrode of the present embodiment.

Examples of the electricity storage device include a secondary battery such as a lithium-ion secondary battery; and a capacitor.

The lithium-ion secondary battery may be a battery including a liquid electrolyte or a battery including a solid or gel electrolyte. Furthermore, the solid or gel electrolyte may be organic or inorganic.

The electrode of the present embodiment may be applied only to the positive electrode, only to the negative electrode, or to both the positive electrode and the negative electrode.

Note that, when the electrode of the present embodiment is applied to the lithium-ion secondary battery, the electrode of the present embodiment is advantageously applied to the negative electrode because of large volume expansion of the negative electrode active material.

### [Lithium-ion secondary battery]

The lithium-ion secondary battery of the present embodiment includes a positive electrode, a negative electrode, and a separator or a solid electrolyte layer located between the positive electrode and the negative electrode. In the lithium-ion secondary battery of the present embodiment, at least one of the positive electrode and the negative electrode is the electrode of the present embodiment.

In the lithium-ion secondary battery of the present embodiment, a positive electrode or negative electrode to which the electrode of the present embodiment is not applied is not particularly limited, as long as it can function as the positive electrode or the negative electrode of the lithium-ion secondary battery.

In the lithium-ion secondary battery of the present embodiment, any battery can be constructed by selecting two materials from materials capable of constituting the electrode, comparing charge and discharge potentials of the two materials, applying one exhibiting a more electropositive potential and the other exhibiting a less electropositive potential to the positive electrode and the negative electrode, respectively.

When the separator is included in the lithium-ion secondary battery of the present embodiment, the separator is located between the positive electrode and the negative electrode.

The separator is not particularly limited and a known separator that can be applied to the lithium-ion secondary battery may be used.

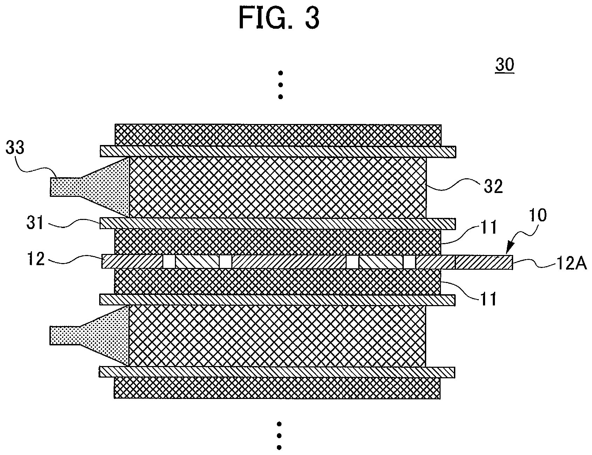

FIG. 3 shows one exemplary lithium-ion secondary battery according to the present embodiment. A lithium-ion secondary battery 30 is an example in which the electrode 10 is applied to the negative electrode.

The lithium-ion secondary battery 30 includes positive electrodes 32 and electrodes (negative electrodes) 10 sequentially formed via a separator 31 on both surfaces thereof and each of the positive electrodes 32 includes an electrode tab 33.

Note that, the number of the electrodes (negative electrodes) 10 and the positive electrodes 32 constituting the lithium-ion secondary battery 30 is not particularly limited.

The electrode tab 33 is not particularly limited and a known electrode tab can be applied.

When each of the positive electrode 32 is a porous metal body having pores filled with the electrode material mixture and serving as the current collector, the electrode tab 33 can be formed by extending an end portion of the current collector with the application of pressure.

When the lithium-ion secondary battery of the present embodiment includes a solid electrolyte layer, the solid electrolyte layer is located between the positive electrode and the negative electrode.

A solid electrolyte included in the solid electrolyte layer is not particularly limited, as long as it can conduct lithium ions between the positive electrode and the negative electrode.

Examples of the solid electrolyte include an oxide electrolyte and a sulfide electrolyte.

### EXPLANATION OF REFERENCE NUMERALS

10 Electrode (negative electrode)
11 Current collector
12 Plate-shaped metal body
12A Electrode tab
13 Resin
21 Through-hole
30 Lithium-ion secondary battery
31 Separator
32 Positive electrode
33 Electrode tab

## Claims

1. An electrode (10) comprising:
a current collector (11);
an electrode material mixture;
a plate-shaped metal body (12) having a through-hole (21) formed therethrough;
a resin (13) provided inside the through-hole (21); and
an electrode tab (12A),
the current collector (11) being a foamed metal,
the current collector (11) having pores filled with the electrode material mixture,
the electrode material mixture comprising an electrode active material capable of occluding and releasing lithium ions,
the electrode tab (12A) being an extending portion extending from the plate-shaped metal body (12),
wherein the current collector (11) has an inner region in which the through-hole (21) of the metal plate-shaped body (12) is located in top view.

2. The electrode (10) according to claim 1, further comprising a porous metal body provided inside the through-hole (21), wherein the resin (13) is filled in the porous metal body.

3. An electricity storage device comprising:
the electrode (10) according to claim 1 or 2.

## Patentansprüche

1. Elektrode (10), umfassend:
einen Stromkollektor (11);
eine Elektrodenmaterialmischung;
einen plattenförmigen Metallkörper (12), der ein durch ihn hindurch ausgebildetes Durchgangsloch (21) aufweist;
ein Harz (13), das im Inneren des Durchgangslochs (21) bereitgestellt ist; und
eine Elektrodenlasche (12A),
wobei der Stromkollektor (11) ein geschäumtes Metall ist,
wobei der Stromkollektor (11) Poren aufweist, die mit der Elektrodenmaterialmischung gefüllt sind,
wobei die Elektrodenmaterialmischung ein aktives Elektrodenmaterial umfasst, das Lithiumionen einschließen und freisetzen kann,
wobei die Elektrodenlasche (12A) ein sich von dem plattenförmigen Metallkörper (12) erstreckender Abschnitt ist,
wobei der Stromkollektor (11) einen inneren Bereich aufweist, in dem sich das Durchgangsloch (21) des plattenförmigen Metallkörpers (12) in Draufsicht befindet.

2. Elektrode (10) nach Anspruch 1, ferner umfassend einen porösen Metallkörper, der im Inneren des Durchgangslochs (21) bereitgestellt ist, wobei das Harz (13) in den porösen Metallkörper gefüllt ist.

3. Elektrizitätsspeichervorrichtung, umfassend:
die Elektrode (10) nach Anspruch 1 oder 2.

## Revendications

1. Électrode (10) comprenant :
un collecteur de courant (11) ;
un mélange de matériau d'électrode ;
un corps métallique en forme de plaque (12) ayant un trou traversant (21) formé à travers celui-ci ;
une résine (13) disposée à l'intérieur du trou traversant (21) ; et
une patte d'électrode (12A),
le collecteur de courant (11) étant un métal moussé,
le collecteur de courant (11) ayant des pores remplis avec le mélange de matériau d'électrode,
le mélange de matériau d'électrode comprenant un matériau actif d'électrode apte à absorber et libérer des ions de lithium,
la patte d'électrode (12A) étant une partie d'extension s'étendant à partir du corps métallique en forme de plaque (12),
dans laquelle le collecteur de courant (11) a une région intérieure dans laquelle le trou traversant (21) du corps métallique en forme de plaque (12) est situé en vue de dessus.

2. Électrode (10) selon la revendication 1, comprenant en outre un corps métallique poreux disposé à l'intérieur du trou traversant (21), dans laquelle la résine (13) est chargée dans le corps métallique poreux.

3. Dispositif de stockage d'électricité comprenant :
l'électrode (10) selon la revendication 1 ou 2.
